# EUROPEAN PATENT APPLICATION

(11) **EP 3 254 828 A1**
(43) Date of publication of application: **13.12.2017**
(21) Application number: 17173339.7
(22) Date of filing: 30.05.2017
(51) Int. Cl.: B29C 64/393, B29C 64/112, B29C 64/386, B33Y 10/00, B33Y 30/00, B33Y 50/02

(54) **PRINTING SYSTEM AND METHOD FOR PRINTING AN OBJECT WITH A PATTERN ON A SURFACE OF THE OBJECT**

(30) Priority: 10.06.2016 EP 16173895
(71) Applicant: OCE Holding B.V., 5914 CA Venlo (NL)
(72) Inventor: VALADE, Cédric T., 5914 CA Venlo (NL); IONASCU, Felicia G., 5914 CA Venlo (NL)
(74) Representative: OCE IP Department

(57) **Abstract**

The present application relates to a method for printing an object that is specified to have a pattern image visible at the surface of the object. The method comprising the steps of generating a plurality of layers of voxels (v) to be printed on top of each other on a support by depositing voxel drops of marking material in order to create the object consisting of columns (c1, c2, cn...) of said voxel drops. Each voxel drop in a column of voxel drops is deposited in a different layer. For each column of voxel drops intended to be printed marking material is deposited for each layer in the column. For each column of voxel drops intended to be printed, it is determined if the location of a top layer of the column is intended to be part of the pattern intended to be established at the surface of the object. If so, a voxel drop deposition is paused for a predetermined number of layers within the column before the top layer of the column is printed. The remaining originally intended layers of the column are deposited after the pause of the voxel drop deposition within the column. Furthermore, the number of layers of the pausing step is determined in accordance with a desired visibility intensity of the desired pattern.

## Description

### BACKGROND OF THE INVENTION

### 1. Field of the invention

The present invention relates to a method for printing an object that is specified to have a pattern visible at the surface of the object by means of a printing system, the method comprising the steps of generating a plurality of layers of voxels to be printed on top of each other on a support by depositing voxel drops of marking material in order to create the object consisting of columns of said voxel drops, wherein each voxel drop in a column of voxel drops is deposited in a different layer, and for each column of voxel drops intended to be printed marking material is deposited for each layer in the column. The object may have a surface of varying height. In other words the heights of the columns of voxel drops may vary.

The term "printing" or "print" refers to building an object from marking material by additive manufacturing, and includes, in particular, jetting marking material for depositing the marking material on the support or on an already printed portion of the object.
The term "voxel" refers to a three-dimensional pixel of a digital 3D image.
The term "object" refers to a three-dimensional object.
The term "pattern" refers to a two-dimensional image which can be shaped over a surface of a three-dimensional object. The pattern may only comprises edges or contours of a two-dimensional image. The pattern may comprise a geometrical image, a real-life image, an abstract image or any other two-dimensional image which can be printed by a printing system. The pattern may be used for a subtle decoration of the object or a more or less hidden marking or identification of the object.

### 2. Description of the Related Art

Printing systems are known that allow printing of multilayer structures that can reach a considerable height as compared to conventionally printed images that are basically flat, or, at least, the height of which is generally disregarded. The structures are generated by stacking layers of material on top of each other. For example, radiation curable ink, in particular UV curable ink, may be used. By repeatedly printing a layer on top of a previously printed, cured layer, a multilayer structure may be built up having a defined height. For example, the height may be up to 10 mm or more. The height, i.e. the thickness of the printed structures, adds an extension in a further dimension to the two dimensional image, and, accordingly, such prints are termed 2.5D prints or relief prints. The printed structure may comprise an image, e.g. a color image.

For printing relief prints or 3D prints, an object is built by stacking layers of material on top of each other. A slicing technique is known that consists in decomposing the object into a set of horizontal layers, which are printed on top of each other.

A pattern image to be printed on the surface of an object is usually printed separately from the inner part and the surface of the object, for example by another specialized printer or after the inner part and the surface layers are completed. This will lead to a deteriorated speed, less integration of production and less ease of use. In a non-integrated workflow it may also be difficult to position the pattern image on the surface of the object as wanted. Such a method may also lead to a lower productivity because of changeover times.

It is an objective of the invention to provide a printing system to facilitate fast printing of objects with a surface specified to have a pattern located on the surface of the object.

### SUMMARY OF THE INVENTION

According to the present invention, this objective is achieved by the method according to the invention, wherein the method further comprises the steps of for each column of voxel drops intended to be printed, determining if the location of a top layer of the column is intended to be part of the pattern intended to be established at the surface of the object, if the location at a top layer of the column is intended to be part of the pattern, pausing a voxel drop deposition for a predetermined number of layers within the column before the top layer of the column is printed, and depositing the remaining originally intended layers of the column after the pause of the voxel drop deposition within the column.

For a column which top layer is part of the pattern a pause of a plurality of print passes of a print head of the printing system over the substrate. During each pass within the pause no marking material is deposited for the column position. After the pause of the plurality of print passes the deposition of marking material at the column position is resumed. In other words, a time delay is intentionally introduced during the marking material deposition sequence for each column which top layer is part of the pattern. This time delay strategy results in producing contouring glossy stripes that follows the edges or contours of the pattern.
By doing so, the printing of the pattern on the surface of the object is integrated with the printing of the object itself. The process of printing the desired pattern is completely integrated with the sequence of the layers, meaning that the pattern appears directly at the surface of the printed object once the latter has completed to build up. No post-processing is required to obtain the effect of the pattern at the surface of the object. The effect of the time delay relies in a geometric change of the surface such as a carving or a groove in the surface. The geometric change is obtained by the time delay of depositing the marking material, and not by means of adding of reducing the amount of marking material to be deposited. In other words, an approximately same amount of marking material is deposited according to the method of the invention as when the object would have been printed without the pattern on the surface of the object.

According to an embodiment the method comprises the step of receiving a desired visibility intensity of the pattern at the surface of the object, and determining the number of layers for the pausing step in accordance with the desired visibility intensity.
The desired visibility intensity may be received by means of a user interface of the printing system or by means of print job specifications that specify the object to be printed and the pattern to emerge at the surface of the printed object. The visibility intensity may be adjusted so that the pattern may appear in a more or less pronounced way.

According to an embodiment the pausing step is established at a predetermined depth with respect to the surface of the object. A pausing phase is introduced underneath the surface at a predetermined depth with respect to the surface. If the layers of the object comprise successively underground layers, white isolation layers and a top (surface) layer, the pausing phase is preferably starting in between the end of the underground layers and the start of the white isolation layers.

According to an embodiment the step of determining if the location of a top layer of the column is intended to be part of the pattern comprises the sub-step of comparing a position of the column with a position in a digital two-dimensional image representing the pattern. The determination if the location of a top layer of the column is intended to be part of the pattern may be established by comparing the column position with an appropriate position in a digital two-dimensional image representing the pattern. The appropriate position in the digital image is a position which is intended to be printed at the column position on the substrate.

According to an embodiment the method comprises the step of replacing a colour of a top layer of a column of the object to be determined to be part of the pattern by a colour defined by the digital two-dimensional image representing the pattern. The pattern may be - besides the pronounced contours of the pattern - easily distinguishable from the object itself if a colour for the two-dimensional image representing the pattern is deviating from the originally specified colour(s) for the surface of the object.

The invention also relates to a printing system for printing an object specified to have a pattern visible at the surface of the object, the printing system comprising a control unit for executing the steps by means of a method according to the invention.

The invention also relates to a non-transitory recording medium comprising computer executable program code configured to instruct a computer to perform any of the methods according to the invention.

### BRIEF DESCRIPTION OF THE DRAWINGS

Embodiment examples of the invention will now be described in conjunction with the drawings, wherein:
- Fig. 1: is a block diagram of a printer control system according to the invention and a printing system according to the invention;
- Fig. 2A - 2B: show pattern images to emerge at the surface of an object to be printed according to the invention;
- Fig. 3: is a schematic simplified illustration of a number of passes of voxels of the object to be printed for illustrating the invention;
- Fig. 4A - 4D: show a built up of the layers of the objet according to the invention;
- Fig. 5: shows the final result of the printing of the object according to the invention including the pattern at the surface of the object;
- Fig. 6: is a schematic diagram of the steps of the method according to the invention; and
- Fig. 7: is a window of a user interface according to the invention for regulating the pattern to emerge at the surface of the object to be printed.

### DETAILED DESCRIPTION OF EMBODIMENTS

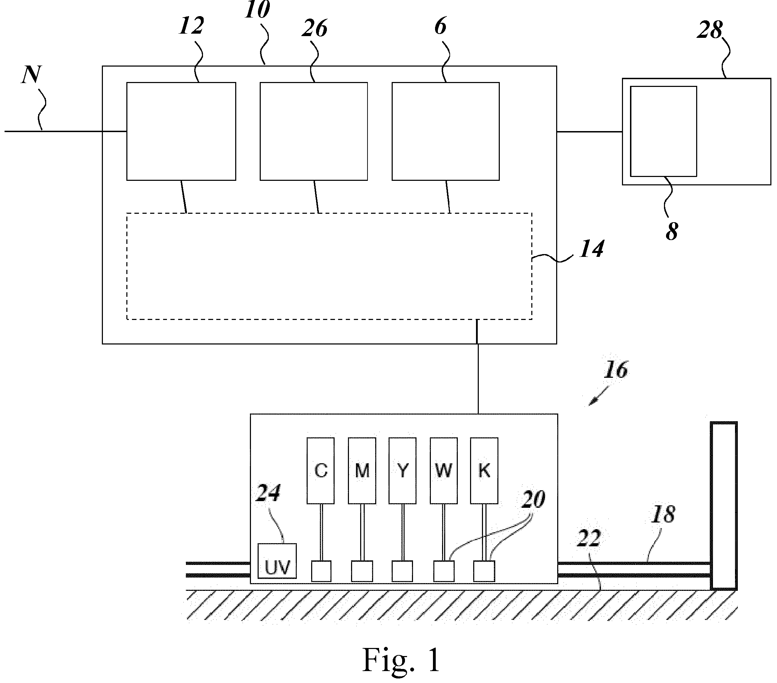

Fig. 1 schematically shows a print system for printing 3D objects by depositing marking material on a support 22 in a number of printing passes. A print controller 10 receives print data in the form of a rasterized object image comprising height data, e.g. in the form of a height channel, for indicating a height of each column of voxels of the rasterized object image, and comprising color data, e.g. in the form of a number of color channels, for indicating a color of each top layer for each column. For example, there are five customary color channels for colorants of the colors cyan (C), magenta (M), yellow (Y), white (W), black (K). The height data specify, for two-dimensional print coordinates X, Y, the height of the respective column of the image. The height data describes a height, i.e. a thickness, of the object in the third dimension Z. More generally, a voxel structure of the 3D object may be derived from a 3D model as input, for example a 3D mesh or height map.

The print controller 10 includes a communication interface 12 connected e.g. to a network N for receiving the print data - for example the print job for the 3D object and the pattern to be realized at the surface of the 3D object when printed - and a raster image processor 14 configured for converting the print data into a number of pass images in a format suitable for driving a print engine 16 synchronized with a motion control system 18 configured for controlling relative motion between print heads 20 of the print engine 16 and the support 22. The motion control system 18 comprises print carriage motion controllers of first and second printing directions X, Y and, optionally a print carriage height controller Z for controlling a height of the print heads 20 above the support 22. For example, the motion control system 18 is configured to control relative motion between the print heads 20 and the support 22 in the X, Y, and Z direction. The print heads have nozzles for jetting the colorants onto the support 22. The print system is a system for printing relief prints using UV curable ink and includes a UV curing device 24.

According to the present invention the print controller 10 further comprises an analysis section 26 and a pause generation section 6, which may be implemented in software and/or hardware. The analysis section 26 is configured to analyze the pass images in order to determine if a top layer of a column is a location of the pattern to be printed on the surface of the object. The pause generation section 6 is configured to generate a pause in depositing layers for the column if the determination by the analysis section 26 is positive.

A user interface having a display device 28 is connected to the print controller 10. The display device 28 is arranged to visualize in a window 8 the preview image comprising the representation of the surface of the object before printing the object by means of the print engine 16. A pattern to be printed on the surface of the object may be added to the preview image. The user interface may be a local user interface at the printing system or a remote user interface. The user interface may be wired to the printing system or wirelessly connected to the printing system.

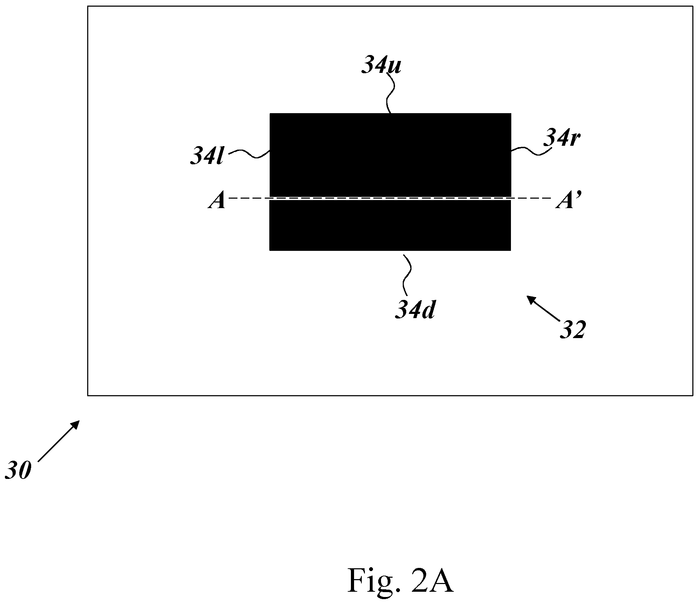

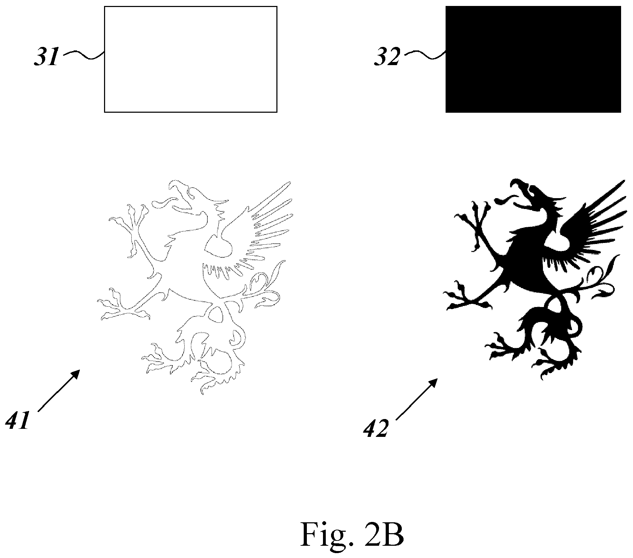

In the following, printing of a 3D object will be exemplarily explained with respect to Figs. 2 - 7.

Fig. 2A is an exemplary pattern image 30 for an object to be printed, for example a rectangular box. The pattern image 30 has the same size and shape as the ground plane of the object to be printed. A black filled rectangle 32 represents the locations of the object at which the delay times will be scheduled according to the invention. A contour of the black filled rectangle 32 will result in the pattern emerging at the surface of the printed object. The contour of the black filled rectangle is a set of four lines 34I, 34r, 34u, 34d forming the rectangle. Each of the four lines 34r, 34I, 34u, 34d will form a groove in the object when printed.

Fig. 2B shows again the black filled rectangle 32 and the corresponding pattern 31 which will emerge at the surface of the object. Usually a user delivers a pattern image like the pattern images 31 and 41 as a user intent pattern design and the print controller of the printing system may derive from the user intent pattern design the pattern image for printing with delay times by filling a shape of the user intent pattern design with a color, for example black, and optionally by dilating the edges of the user intent pattern design. The shape may be filled by using conventional image processing techniques which could be automated by a software program, starting from the draw of the lines of the pattern design or by dilating with a few pixels the lines of the pattern design.
Each marked - black - pixel is interpreted as a pausing instruction according to the method of the invention, i.e. the entire filled rectangle. But, in the end, only the edges of the design pattern emerge at the surface.

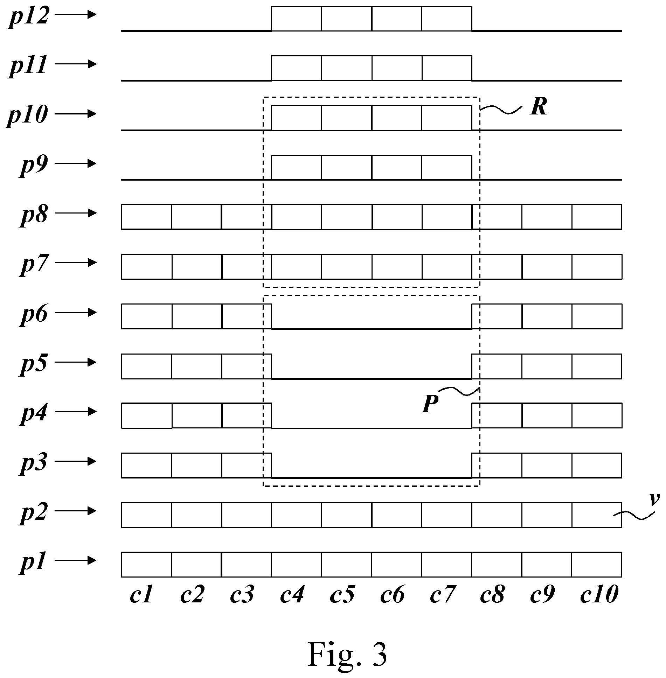

In order to illustrate the forming of the layers for establishing the rectangular box 32 and the corresponding pattern 31, a depth of layers for a cross cut AA' as shown in Fig. 2A is further shown in Fig. 3.

The white part of the dashed line of the cross cut AA' within the black filled rectangle 32 is shown by columns c4, c5, c6, c7 in Fig. 3. The black parts of the dashed line of the cross cut AA' outside the black filled rectangle 32 are formed by columns c1, c2, c3, and columns c8, c9, c10.
When the object would be printed without the pattern 8 layers p1 - p8 of voxels v of marking material would be deposited on top of each other. Each layer is about 25 µm thick.
However, since in this example the pattern of the rectangle is specified to emerge at the surface of the object, voxels v which would be printed for the columns c4 - c7 at location P are not printed in passes p3 - p6, but printing of those voxels is postponed to passes p7 - p10 at location R.

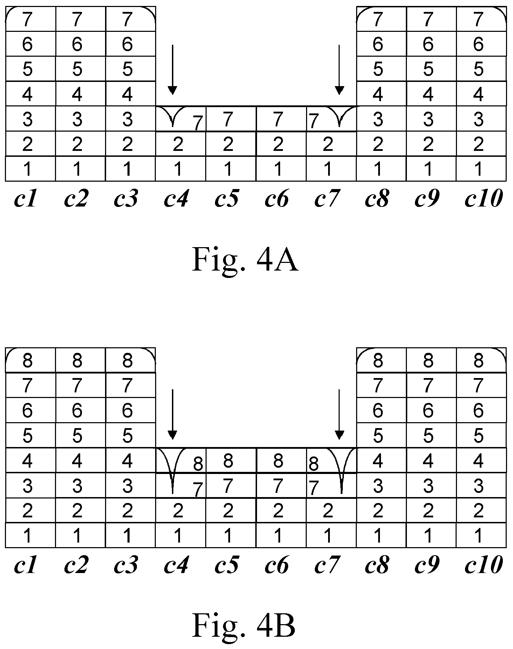

Fig. 4A - 4D show what happens when printing in the passes p1 - p12. In Fig. 4A a situation is shown after printing the first seven passes p1 - p7. In the layers in Fig. 4A pass numbers are shown in the voxel representations which indicate the pass in which the voxels are deposited. In each of the columns c1, c2, c3, c8, c9, c10 seven voxels are printed on top of each other. For the columns c4 - c7 two layers are deposited in the first two passes numbered 1, 2. Then four passes numbered 3, 4, 5, 6 have been established without depositing voxels in the column c4 - c7. In the seventh pass 7 a third layer is deposited for the columns c4 - c7. In particular, the third layer of columns c3, c8 is deposited in the third pass 3, while the third layer of the columns c4, c7 is deposited in the seventh layer 7. A time difference between depositing marking material in the third pass 3 and depositing marking material in the seventh pass 7, leads to less coalescence between the marking material in the columns c3, c8 and the marking material in the columns c4, c7 respectively at the third layer position. Therefore a start of a groove is formed in the column c4 and in the column c7 indicated by arrows in Fig. 4A.

Fig. 4B shows the situation when the eighth pass 8 has occurred. The grooves at columns c4 and c7 are deepened a bit as indicated by arrows in Fig. 4B.

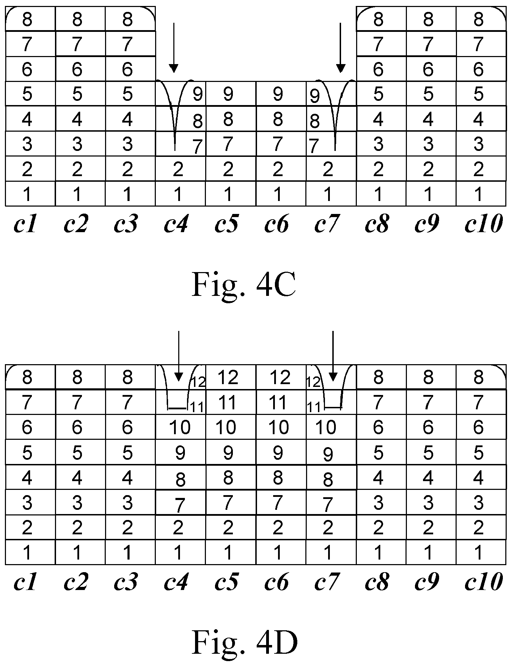

Fig. 4C shows the situation when the ninth pass 9 has occurred. The grooves at columns c4 and c7 are deepened a bit more as indicated by arrows in Fig. 4C. Since the columns c1, c2, c3, c8, c9, c10 have reached there desired height according to the specifications of the object to be printed, no ninth layer of voxels of marking material is deposited on the columns c1, c2, c3, c8, c9, c10 and only a layer of voxels of marking material is deposited on the columns c4 - c7 in the ninth pass 9.

Fig. 4D shows the end situation when the last pass 12 has occurred. The grooves at columns c4 and c7 are visible for the user at the surface of the printed object and form parts of the left side 34I and the right side 34r of the desired rectangular pattern 32 respectively.

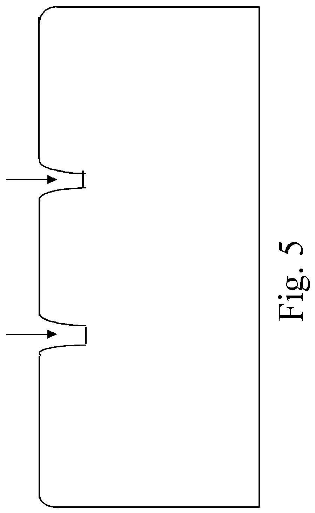

Fig. 5 shows the 3D object at the cross cut AA' when 12 passes have been printed. The arrows in Fig. 5 indicate the locations at the surface of lines of the pattern. The 3D object marked with the pattern or not marked with the pattern strictly requires an approximately same amount of marking material. The controlled timing of the delay of deposition according to the invention determines the strength of the appearance of the pattern at the surface of the object.

For the example mentioned here-above a rectangular box has been selected to be printed. However, other 3D shapes may be envisioned. For the example mentioned here-above a rectangular pattern has been selected to be integrated in the printing of the 3D object. However, a pattern of any other 2D shape may be envisioned like the pattern 41 in Fig. 2B.

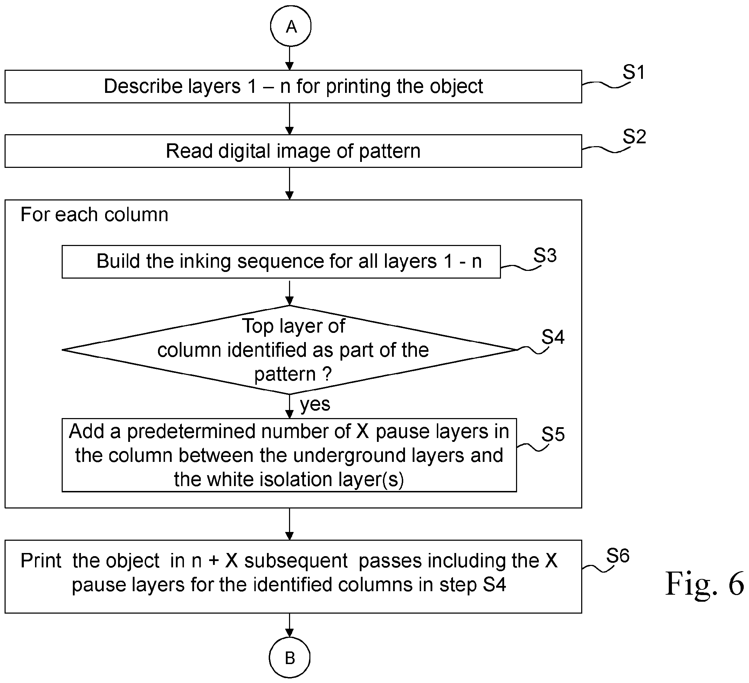

Fig. 6 is a flow diagram of the method according to the invention. The method may be executed by an application program implemented in software and/or hardware residing in the print controller 10 of the printing system according to the invention. Parallel processing may be used. From a starting point A a first step S1 is reached.

In the first step S1 the layers for printing the object are described in software. A number of n layers are specified to be printed on top of each other in n subsequent passes.

In a second step S2 a digital image for the pattern is read which is specified to emerge from the surface of the object to be printed.
For each column in the n layers steps a third step S3, a fourth step S4 and a fifth step S5 are executed.
In the third step S3 for a column an inking sequence for all layers 1 - n is built.
The inking sequence may indicate for each voxel position in each considered layer, what colorant and what volume will be deposited according to a chosen print mode.

In the fourth step S4 it is checked for a column if the top layer of the column is identified as a part of the pattern which is read in the second step S2. If not so, the method proceeds to the next column for the third step S3 or to the sixth step S6 if all columns have been processed.
The top layers of all columns may be projected to the plane of the read pattern image in two dimensions X, Y. When the top voxel of a column is projected on a pixel of the pattern image which pixel is part of the pattern itself, the top layer of the column is identified as part of the pattern to emerge at the surface of the object.
If the top layer of a column is identified as a part of the pattern, the method proceeds to the fifth step S5.

In the fifth step S5 a predetermined number of X pause layers is added in the column below the surface of the object to be printed. The predetermined number of X passes is 4 in the example in Fig. 4A - 4D. By selecting a lower number than X the pattern will becomes less pronounced and by selecting a higher number than X the pattern will be more pronounced. According to a preferred embodiment the pause layers are added to the column between the underground layers and the white isolation layer(s).

In the sixth step S6 the object is printed in n + X subsequent passes including the X pause layers for the column positively identified in the fourth step S4. The specified colour of the top voxel of an identified column may be overruled by the colour of the corresponding pixel of the pattern image.

The method ends in an end point B.

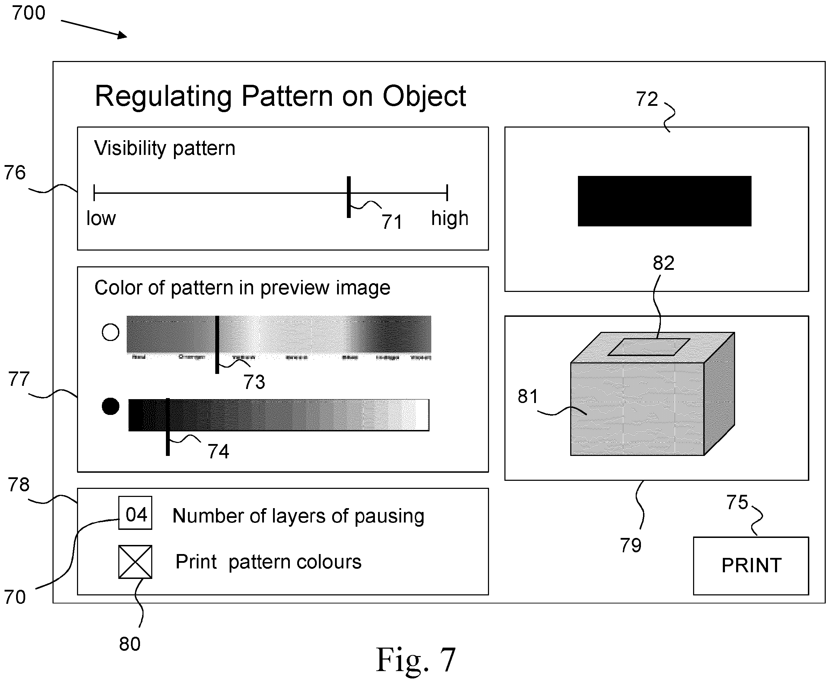

Fig. 7 shows a user interface window 700 for the operator or user to regulate the pattern image 72 at the surface of an object 81 before printing the object 81 and to adjust a preview image 79 of the object 81 including an emerging pattern 82 according to the pattern image 72.

The window 700 comprises a colour function 77 for selecting a colour for the pattern in the preview image 79. A colour may be selected from a colour spectrum band with a first slider 73 or from a grey tone band with a second slider 74 by means of toggling between two radio buttons in front of the colour spectrum band and the grey tone band respectively in the colour function 77. When moving the first slider 73 or the second slider 74, a colour of the pattern 82, if any, in the preview image 79 is automatically changed accordingly.

The window 700 comprises a test function 76 for selecting a visibility intensity of the pattern at the surface of the object 81 when printed. A third slider 71 may be used to adjusts a degree of visibility from low to high or vice versa. When moving the third slider 71, the pattern 82 in the preview image 79 of the object 81 is automatically adjusted accordingly. In addition to the test function 76 an entry box 70 is provided in an extra function list box 78 in order to set the precise number of layers of pausing at the columns of the object 81 which top layers are identified as part of the pattern image 72.

In the extra function list box 78 also a check box 80 is provided in order to indicate that the pattern 82 is emerging in the colours of the pixels of the pattern image 72. The colours specified by the top layers of the columns in the object 81 which are identified as a part of the pattern 82 will then be overruled by the pattern colours. It is noted that also colours in more than one upper layer - preferably a number of upper layers lower or equal to the number of layers of pausing - may be affected by checking the check box 80.

When the user or operator has finally reached a satisfactory regulation of the pattern 82 to emerge at the surface of the object 81, he may press a PRINT button 75 on the window 700 in order to print the object 81 by the printing system according to the invention.

## Claims

1. Method for printing an object that is specified to have a pattern image visible at the surface of the object, the method comprising the steps of generating a plurality of layers of voxels to be printed on top of each other on a support by depositing voxel drops of marking material in order to create the object consisting of columns of said voxel drops, wherein each voxel drop in a column of voxel drops is deposited in a different layer, and for each column of voxel drops intended to be printed marking material is deposited for each layer in the column,
wherein the method further comprises the steps of
- for each column of voxel drops intended to be printed
determining if the location of a top layer of the column is intended to be part of the pattern intended to be established at the surface of the object,
if the location at a top layer of the column is intended to be part of the pattern image, pausing a voxel drop deposition for a predetermined number of layers within the column before the top layer of the column is printed, and depositing the remaining originally intended layers of the column after the pause of the voxel drop deposition within the column, and
- receiving a desired visibility intensity of the pattern at the surface of the object, and determining the number of layers for the pausing step in accordance with the desired visibility intensity.

2. Method according to claim 1, wherein the pausing step is established at a predetermined depth with respect to the surface of the object.

3. Method according to any of the preceding claims, wherein the step of determining if the location of a top layer of the column is intended to be part of the pattern comprises the sub-step of comparing a position of the column with a position in a digital two-dimensional image representing the pattern.

4. Method according to claim 3, wherein the method comprises the step of replacing a colour of a top layer of a column of the object to be determined to be part of the pattern by a colour defined by the digital two-dimensional image representing the pattern.

5. A printing system for printing an object specified to have a pattern image visible at the surface of the object, the printing system comprising a control unit for executing the steps by means of a method according to any of the preceding claims.

6. Non-transitory recording medium comprising computer executable program code configured to instruct a computer to perform any of the methods according to claims 1 - 4
